# EUROPEAN PATENT APPLICATION

(11) **EP 2 042 794 A1**
(43) Date of publication of application: **01.04.2009**
(21) Application number: 07117475.9
(22) Date of filing: 28.09.2007
(51) Int. Cl.: F16L 1/16, F16L 1/20

(54) **Method and guide assembly for laying a pipeline**

(71) Applicant: SHELL INTERNATIONALE RESEARCH MAATSCHAPPIJ B.V., 2596 HR Den Haag (NL)
(72) Inventor: Peek, Ralph, 2280 AB Rijswik (NL)
(74) Representative: Zeestraten, Albertus W. J.

(57) **Abstract**

A method of laying a pipeline in a zigzag configuration at the waterbottom to accommodate thermal expansion comprises:
- installing a series of guide posts (6A-6C) on the waterbottom (2) in a predetermined zigzag pattern;
- lowering the pipeline (1) to the waterbottom (2) such that the pipeline (1) is bent in a zigzag pattern around the guide posts (6A-6C); and
- arranging a slide frame (7A-7C) on or close to the waterbottom (2) adjacent to at least one of the guide posts (6A-6C), such that the pipeline (1) lands on or close to the slide frame (7A-7C) and is subsequently induced to slide over the slide frame (7A-7C) towards the adjacent guide post (7A-7C) before the pipeline(1) is bent around the adjacent guide post (7A-7C).

## Description

### Background of the Invention

The invention relates to a method and guide assembly for laying a pipeline in a zigzag configuration on the waterbottom to accommodate thermal expansion.

Such a method is known from US patent 6,910,830 and from OTC paper 15130 " King Flowlines - Thermal Expansion Design and Implementation" presented by G.E. Harrison et al. at the 2003 Offshore Technology Conference held in Houston, USA from 5 to 8 May 2003.

In the method disclosed in this OTC paper the pipeline is laid in a zigzag or snake configuration around counteracts that are large vertical cylindrical clump weights that are installed on the waterbottom to form tight radius curves in the pipe route. Once the pipe is laid the counteracts are recovered and reused further along the route.

A disadvantage of the method known from the OTC paper is that the pipeline may sink at least partially into the waterbottom, in particular if the waterbottom comprises soft clay, such that dragging forces exerted by the waterbottom on the pipeline during the bending process may exert high strain to the wall of the pipeline, such that the pipeline may buckle and/or be otherwise damaged and/or deformed during the bending process.

It is an object of the present invention to alleviate this disadvantage and to provide a method and guide assembly for laying a pipeline in a zigzag configuration on the waterbottom such that only minimal bending, buckling, tension, compression and/or other forces are exerted to the pipeline, even if the pipeline is laid on a waterbottom which comprises soft clay.

### Summary of the Invention

In accordance with the invention there is provided a method of laying a pipeline in a zigzag configuration at the waterbottom to accommodate thermal expansion, the method comprising:
- installing a series of guide posts on the waterbottom in a predetermined zigzag pattern;
- lowering the pipeline to the waterbottom such that the pipeline is bent in a zigzag pattern around the guide posts; and
- arranging a slide frame on the waterbottom adjacent to at least one of the guide posts, such that the pipeline lands on or close to the slide frame and is subsequently induced to slide over the slide frame towards the adjacent guide post before the pipeline is bent around the adjacent guide post.

The pipeline may be lowered from a stinger of a laybarge which is induced to move forward from a location upward of the slide frame to a location downward of the slide frame and to change heading while the pipeline is lowered from the stinger such that the pipeline lands on the slide frame and is subsequently induced to slide over the slide frame towards the guide post before the pipeline touches down on the waterbottom at a location downward of the slide frame, thereby inhibiting buckling of the pipeline in the vicinity of the guide post.

The pipeline may be used for transportation of crude oil and/or natural gas at an offshore location. The temperature of the transported crude oil and/or natural gas may fluctuate and in such case it is preferred to have the pipeline laid a predetermined zigzag or snake configuration on the waterbottom to accommodate thermal expansion such that thermal expansion forces is distributed evenly over several buckles and to avoid lifting of the pipeline from the waterbottom due to buckling in a vertical plane.

In accordance with the invention there is also provided a guide assembly for use in the method according the invention, which assembly comprises a slide frame and a guide post mounted on the slide frame.

The guide post and slide frame may be mounted on a mudmat, the guide post may have a substantially orthogonal orientation relative to the mudmat, and the slide frame may comprise an upper rim that has a tilted orientation relative to the mudmat and may extend from a side of the mudmat to the guide post.

The mudmat may comprise a substantially flat support frame and the upper rim of the slide frame and the guide post may be secured to the support frame by a series of tilted support rods, which provide a roof like support structure for supporting the slide frame and the guide post.

The mudmat may be provided with ribs which are configured to dig into the waterbottom for anchoring the guide assembly.

These and other features, advantages and embodiments of the method and assembly according to the invention are disclosed in the accompanying claims, abstract, drawings and the following detailed description of embodiments depicted in the accompanying drawing, in which:

### Brief Description of the Drawing

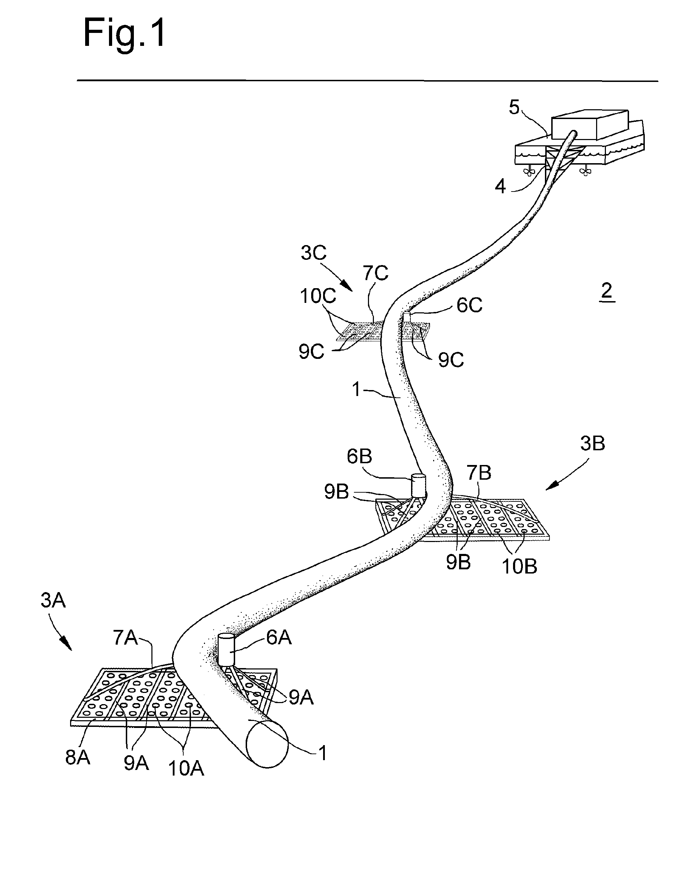

FIG.1 depicts a schematic three-dimensional view of a pipeline, which is laid on the waterbottom using the method and guide assembly according to the invention.

### Detailed Description of Depicted Embodiment

FIG.1 shows a pipeline 1, which is laid in a zigzag configuration on the waterbottom 2 to accommodate thermal expansion using the method and three guide assemblies 3A, 3B and 3C according to the invention. The pipeline 1 is lowered from a stinger 4 at the stern of a laybarge 5. Each guide assembly 3A-C comprises a vertical guide post 6A-C and an inclined slide frame 7A-7C that are supported by a flat support frame 8A-8C and a series of tilted support rods 9A-9C, which provide roof-like support structures for the guide posts 6A-6C and the inclined slide frames 7A-7C. Each guide assembly 3A-3C furthermore comprises a perforated mudmat 10A-10C which is arranged within the support frame 8A-8C and ribs (not shown) that penetrate into the waterbottom 2 for anchoring the guide assemblies 3A-3C.

During the pipelaying operation the laybarge 5 moves forward and simultaneously makes a zigzag movement to lay the pipeline 1 on the guide assemblies 3A-3C and to pull the pipeline against the guide posts 6A-6C, thereby inducing the pipeline to bend around the guide posts 6A-6C in the zigzag configuration shown.

A suitable angle α between a line that interconnects the guide posts 6A and 6B and a line that interconnects the guide posts 6B and 6C may be between 5 and 15 degrees, preferably between 8 and 12 degrees.

The tilted slide frames 7A-7C are oriented in sequentially opposite lateral directions relative to the vertical guide posts 6A-6C such that the pipeline 1 lands on or adjacent to the slide frame 7A-7C and is subsequently pulled over the slide frame 7A-7C against the guide post 6A-6C.

The installation and laying sequence may be as follows:
a) The guide assemblies 3A-3C may be pre-installed or laid down from the laybarge 5 during straight pipelay.
b) Straight pipelay continues till the pipeline 1 is firmly seated on one of the slide frames 7A-7C. The length of the slide frame 7A-7C is chosen such that it will not be missed despite inevitable uncertainties about what will be the exact landing position of the pipeline 1 with respect to the slide frame 7A-7C. It is preferred to make the slide frames 7A-7C long enough so that pipeline 1 will not fall off it during hydrotesting, as this could lead to the pipeline 1 becoming firmly embedded into a soft clay waterbottom 2.
c) Lateral movement of the laybarge 5 to create a lateral bend on the slide frame 7A-7C. The change in direction α is small, but in contrast to the procedure for laying around a curve of a specified radius, here the change in direction is applied all at once, so that it remains concentrated within the span created by the slide frame 7A-7C. This is referred to as a (nominally) zero radius bend, because the sequence of laybarge positions is as if it were laying a bend with a zero radius of curvature. If the pipeline 1 did not have flexural rigidity, a zero-radius bend could indeed develop at the guide post 6A-6C of each slide frame 7A-7C, but because of the flexural rigidity there is a small minimum radius of curvature of the pipeline 1 in the vicinity of the guide posts 6A-6C.

There is some room for choosing the exact timing of the lateral pull (step c above): it should be after the pipeline 1 is firmly seated on of the slide frames 7A-7C, but preferably before touchdown of the pipeline 1 on the other side of the slide frame 7A-7C. The optimal timing could be derived from finite element simulations of the process, tough it seems reasonable to expect that the approach is robust and not sensitive to the exact timing of the lateral pull within the above-mentioned range.

The guide post 6A-6C on each guide assembly 3A-3C is intended to prevent the pipeline 1 from being pulled off the slide frame 7A-7C, but it need not be a concern if the pipeline 1 is not pulled against the guide post 6A-6C during the lateral pull, as long as the reason for this is not failure to perform the lateral pull, or a sudden change in currents that compensates for the effect of the lateral pull.

Suitable precautions should be taken to prevent the guide assemblies 3A-3C from sliding over the seabed. These may include the following:
a) Make the guide frames 3A-3C sufficiently heavy.
b) Ensure that drainage is possible, so that the guide assemblies 3A-3C do not remain on underconsolidated clay.
c) Provide a mud skirt (for steel slide frame).
d) Use ribbed bottom (for concrete slide frame)

Furthermore the guide assemblies 3A-3C should be designed such that pipeline 1 impact at the guide posts 6A-6C will not topple the guide assemblies 3A-3C.

The upper surface of each of the slide frames 7A-7C may be provided with a low friction sliding surface, if necessary.

The guide assemblies 3A-3B used in the zigzag pipelaying method according to the invention enable to bend the pipeline 1 into a zigzag shape in a controlled manner, such that buckling of the pipeline 1 during the bending process is inhibited, even if the pipeline is laid on a seabed 1 comprising soft clay, since the pipeline 1 is lifted above the waterbottom 2 by the slide frames 7A-7C such that no drag forces are imposed on the pipeline 1 by waterbottom particles that would be pushed up in front of the bending pipeline 1 if prior art pipe bending methods would be employed, such as the method according to OTC paper 15310, wherein no sliding frames are arranged in the vicinity of the guide posts 6A-C.

It will be understood that variations may be made to the preferred embodiment described with reference to FIG.1.

For example, the laybarge 5 may be moved laterally each time when it changes heading so that it makes a sawtooth shaped zigzag movement. Furthermore each of the guide posts 6A-C may have a Γ-shaped stopper at its upper end to prevent the pipeline 1 from being pulled over the stopper due to sea motion and/or inaccurate tension control.

## Claims

1. A method of laying a pipeline in a zigzag configuration at the waterbottom to accommodate thermal expansion, the method comprising:
- installing a series of guide posts on the waterbottom in a predetermined zigzag pattern;
- lowering the pipeline to the waterbottom such that the pipeline is bent in a zigzag pattern around the guide posts; and
- arranging a slide frame on the waterbottom adjacent to at least one of the guide posts, such that the pipeline lands on or close to the slide frame and is subsequently induced to slide over the slide frame towards the adjacent guide post before the pipeline is bent around the adjacent guide post.

2. The method of claim 1, wherein the pipeline is lowered from a stinger of a laybarge which is induced to move forward from a location upward of the slide frame to a location downward of the slide frame and to change heading while the pipeline is lowered from the stinger such that the pipeline lands on the slide frame and is subsequently induced to slide over the slide frame towards the guide post before the pipeline touches down on the waterbottom at a location downward of the slide frame, thereby inhibiting buckling of the pipeline in the vicinity of the guide post.

3. The method of claim 1, wherein the guide post is secured to the slide frame.

4. The method of claim 3, wherein the guide post and slide frame are mounted on a mudmat and the slide frame comprises an upper rim that has a tilted orientation and extends from a side of the mudmat to the guide post.

5. The method of claim 4, wherein the mudmat comprises a substantially flat support frame and the upper rim of the guide frame and the guide post are secured to the support frame by a series of tilted support rods.

6. The method of claim 1,wherein the pipeline is used for transportation of crude oil and/or natural gas at an offshore location.

7. A guide assembly for use in the method according to any one of claims 1-6, comprising a slide frame and a guide post mounted on the slide frame.

8. The guide assembly of claim 6, wherein the guide post and slide frame are mounted on a mudmat, the guide posts has a substantially orthogonal orientation relative to the mudmat, and the slide frame comprises an upper rim that has a tilted orientation relative to the mudmat and extends from a side of the mudmat to the guide post.

9. The guide assembly claim 8, wherein the mudmat comprises a substantially flat support frame and the upper rim of the slide frame and the guide post are secured to the support frame by a series of tilted support rods, which provide a roof like support structure for supporting the slide frame and the guide post.

10. The guide assembly of claim 8, wherein the mudmat is provided with ribs which are configured to dig into the waterbottom for anchoring the guide assembly.
